# FASCICULE DE BREVET EUROPEEN

(11) **EP 0 557 218 B1**
(45) Date de publication et mention de la délivrance du brevet: **13.09.1995**
(21) Numéro de dépôt: 93420072.6
(22) Date de dépôt: 16.02.1993
(51) Int. Cl.: G05D 7/06, G05B 11/28

(54) **Circuit de commande de vanne**
Ventil-Steuerschaltung
Valve control circuit

(30) Priorité: 18.02.1992 FR 9202186
(43) Date de publication de la demande: 25.08.1993
(73) Titulaire: CROUZET Electroménager, F-26000 Valence (FR)
(72) Inventeur: Astic, Georges, F-26320 Saint-Marcel-les-Valence (FR); Dejoux, Didier, F-26400 Crest (FR); Girardin, Denis, F-26300 Alixan (FR)
(74) Mandataire: de Beaumont, Michel

(56) Documents cités:
- WO-A-83/01693
- DE-A- 3 312 108
- FR-A- 2 660 981
- US-A- 4 210 823

## Description

La présente invention concerne un circuit de commande de vanne et notamment d'une vanne dont le débit dépend de la position angulaire du rotor d'un moteur de commande.

Une telle vanne est décrite dans la demande de brevet français 2 660 981. Cette vanne comprend une pièce basculante écrasant, sous l'action d'un ressort, un tube dans lequel passe un fluide. Au repos, la pièce basculante écrase complètement le tube et le débit est nul. Un moteur démultiplié agit sur la pièce basculante à l'encontre du ressort. Lorsqu'on veut établir un débit, le moteur est commandé pour effectuer un certain nombre de rotations correspondant à une position prédéterminée de la pièce basculante et à un débit associé. Il est décrit dans cette demande comment il faut choisir la tension de commande du moteur pour établir un débit choisi.

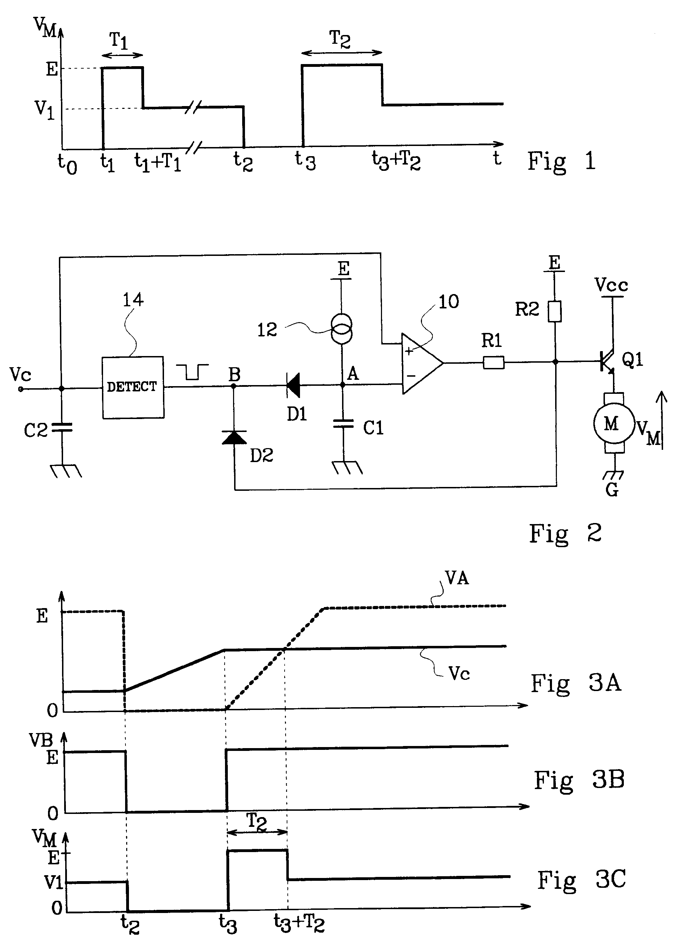

La figure 1 illustre l'allure de la tension V_{M} à appliquer au moteur pour obtenir deux débits différents. A un instant t₀, la tension V_{M} est nulle, ce qui correspond à la position de repos du moteur et à un débit nul. A un instant t₁, on veut établir un premier débit. La tension V_{M} passe à une valeur E suffisante pour entraîner le moteur en rotation à l'encontre du ressort susmentionné. La valeur E est maintenue pendant un intervalle de temps T₁ où le moteur effectue un certain nombre de tours correspondant à une position déterminée de la pièce basculante et donc à un débit associé. A la fin de l'intervalle T₁, c'est-à-dire à un instant t₁+T₁, la tension V_{M} est abaissée jusqu'à une valeur V₁ qui n'est pas suffisante pour entraîner en rotation le moteur mais qui suffit à maintenir le moteur dans sa position malgré l'effort du ressort. Grâce aux importantes forces de frottement intervenant dans la transmission de mouvement du moteur à la pièce basculante, il n'est pas nécessaire de connaître avec précision cette valeur V₁. La valeur V₁ peut être facilement déterminée par des essais et peut être choisie dans une plage de valeurs qui est d'autant plus grande que les efforts de frottement sont élevés.

A un instant t₂, on désire, par exemple, augmenter le débit. La tension V_{M} est annulée pour que le moteur retrouve sa position de repos de débit nul. A un instant ultérieur t₃, on réapplique au moteur une tension E pendant un intervalle de temps T₂ correspondant au nouveau débit. A un instant t₃+T₂, la tension V_{M} est abaissée de nouveau jusqu'à la valeur V₁ de maintien du nouveau débit. Il faut passer par une étape de repos (entre t₂ et t₃) avant l'établissement d'un nouveau débit pour conserver l'origine de débit nul et non l'origine correspondant au débit précédent. Ceci permet d'étalonner avec précision les durées de commande en fonction des débits.

Un objet de la présente invention est de prévoir un circuit de commande permettant d'établir, en fonction d'une tension de consigne de débit, une tension de commande du moteur présentant l'allure de la figure 1.

Cet objet est atteint grâce à un circuit de commande d'une vanne dont le débit dépend de la position d'un élément mobile d'un moteur, rappelé vers une position de repos en l'absence d'alimentation du moteur. Le circuit comprend : un détecteur de variation de tension recevant en entrée une tension de consigne de débit et délivrant un signal de détection à l'état actif tant que la tension de consigne varie ; un temporisateur prévu pour compter un intervalle de temps de durée variant dans le même sens que la tension de consigne et pour être initialisé par ledit état actif ; et des moyens associés au temporisateur pour fournir au moteur une tension nul le tant que ledit signal de détection est actif, une tension suffisante pour entraîner le moteur lorsque le temporisateur compte l'intervalle de temps, et une tension suffisante pour maintenir le moteur dans sa position à la fin de l'intervalle de temps.

Selon un mode de réalisation de la présente invention, le temporisateur comprend un comparateur comparant la tension de consigne et la tension présente aux bornes d'une capacité chargée par une source de courant, une diode étant disposée entre la capacité et la sortie du détecteur pour décharger la capacité lorsque le signal de détection est actif.

Selon un mode de réalisation de la présente invention, les moyens associés au temporisateur comprennent un pont diviseur relié entre la sortie du comparateur et un potentiel haut, la tension présente en un point intermédiaire du pont diviseur étant amplifiée en courant pour être appliquée aux bornes du moteur, une diode étant disposée entre ledit point intermédiaire du pont et la sortie du détecteur pour annuler la tension en ce point intermédiaire lorsque le signal de détection est actif.

Selon un mode de réalisation de la présente invention, le détecteur comprend au moins un montage constitué d'un comparateur recevant sur une entrée la tension de consigne et sur l'autre entrée la tension de consigne à travers un filtre passe-bas , et d'une résistance reliée entre un potentiel adéquat et une des entrées du comparateur pour que ce comparateur fournisse au repos un signal de détection à l'état inactif.

Ces objets, caractéristiques et avantages ainsi que d'autres de la présente invention seront exposés en détail dans la description suivante de modes de réalisation particuliers faite en relation avec les figures jointes parmi lesquelles :
la figure 1, précédemment décrite, représente l'allure d'une tension de commande à fournir à une vanne ;
la figure 2 illustre schématiquement un mode de réalisation de circuit de commande selon la présente invention, capable de générer la tension de la figure 1 ;
les figures 3A à 3C représentent les allures de signaux en différents noeuds du circuit de la figure 2 ;
la figure 4 représente un mode de réalisation d'un détecteur de variation utilisé dans le circuit de la figure 2 ; et
la figure 5 représente des circuits optionnels que l'on peut combiner au circuit de la figure 2.

A la figure 2, on retrouve un moteur de commande M d'une vanne telle que décrite précédemment. Ce moteur est relié à un potentiel de référence G, tel que la masse, et piloté par un transistor Darlington Q1 relié à une tension d'alimentation Vcc. Le transistor Q1 est monté en suiveur et sa base est commandée à travers un pont de résistance R1, R2 relié entre une tension constante E et la sortie d'un comparateur 10. De préférence, ce comparateur 10 est choisi à sortie à collecteur ouvert, c'est-à-dire que, à l'état bas, la sortie est reliée à la masse et, à l'état haut, la sortie est à haute impédance.

L'entrée non-inverseuse du comparateur 10 reçoit une tension de consigne de débit Vc qui peut être fournie par un potentiomètre manuel ou par une installation utilisant la vanne à commander. Cette tension Vc est variable entre 0 et la tension E. L'entrée inverseuse du comparateur 10 est reliée à un point de connexion au noeud A entre une capacité C1 reliée à la masse et une source de courant 12 reliée à la tension constante E.

La tension de consigne Vc est également appliquée à l'entrée d'un détecteur de variation 14 dont la sortie B est reliée au noeud A et à la base du transistor Q1 par des diodes, D1 et D2 respectivement, montées dans le sens bloquant. Une capacité C2 est reliée entre l'entrée du détecteur 14 et la masse pour lisser des variations brusques de la tension de consigne Vc. Le fonctionnement de ce circuit sera décrit en relation avec les courbes des figures 3A à 3C.

La figure 3A représente par un trait plein l'allure de la tension de consigne Vc lors d'une demande d'augmentation de débit et, par un trait en pointillés, l'allure de la tension VA résultant au noeud A. La figure 3B représente l'allure de la tension VB de sortie du détecteur 14. La figure 3C illustre l'allure de la tension V_{M} obtenue aux bornes du moteur.

Jusqu'à un instant t₂, correspondant par exemple à l'instant t₂ de la figure 1, la tension de consigne Vc est constante et égale à une valeur basse. La tension de sortie VB du détecteur est à une valeur inactive correspondant à la tension constante E, ou à toute tension supérieure à la valeur maximale de la tension Vc, telle que la tension d'alimentation Vcc. Ainsi, la diode D1 est bloquée et permet à la capacité C1 de se charger à sa valeur maximale E. La tension sur l'entrée inverseuse du comparateur 10 étant donc supérieure à la tension de consigne Vc sur l'entrée non-inverseuse, la sortie du comparateur 10 est à sa valeur basse 0. On retrouve donc aux bornes du moteur une tension V₁ pratiquement égale à la tension E divisée par le rapport du pont R1, R2. Comme on l'a mentionné précédemment, la tension V₁ est insuffisante pour entraîner en rotation le moteur, mais suffisante pour maintenir le moteur dans sa position à l'encontre du ressort susmentionné. La tension de sortie du pont R1, R2 n'est pas affectée par la diode D2 qui est également bloquée.

A l'instant t₂, on désire augmenter le débit de la vanne. A partir de l'instant t₂, la tension de consigne Vc augmente progressivement, freinée par la capacité C2, jusqu'à un instant t₃ où elle atteint sa nouvelle valeur de consigne plus élevée. Pendant toute la durée de variation de la tension Vc, la tension de sortie VB du détecteur 14 s'annule, ce qui correspond à un niveau actif. La diode D1 devient passante entraînant la décharge de la capacité C1, ce qui est représenté par l'annulation rapide de la tension VA. La diode D2 devient également passante et provoque l'annulation de la tension de sortie du pont R1, R2, et donc de la tension V_{M} aux bornes du moteur.

A l'instant t₃, la tension de consigne Vc cesse de varier et la tension de sortie du détecteur 14 rejoint son état inactif E. Les diodes D1 et D2 se bloquent, la capacité C1 peut donc se recharger et le pont R1, R2 n'est plus inhibé. La tension VA aux bornes de la capacité C1 croît progressivement jusqu'à sa valeur maximale E. On a représenté la tension VA en train de croître linéairement, ceci dépend de la nature de la source de courant 12 ; si la source 12 est une résistance, la tension VA croît selon une exponentielle.

A un instant t₃+T₂, la tension VA atteint la tension de consigne Vc. Entre les instants t₃ et t₃+T₂, la sortie du comparateur 10 est à son état haut et on retrouve aux bornes du moteur une tension V_{M} qui est pratiquement égale à la tension E alors présente à la sortie du pont R1, R2. A l'instant t₃+T₂, la sortie du comparateur 10 bascule à son état bas et on se retrouve dans les conditions précédant l'instant t₂, le moteur étant arrêté dans une nouvelle position déterminée par la durée T₂ de charge de la capacité C1 jusqu'à la nouvelle valeur de consigne Vc.

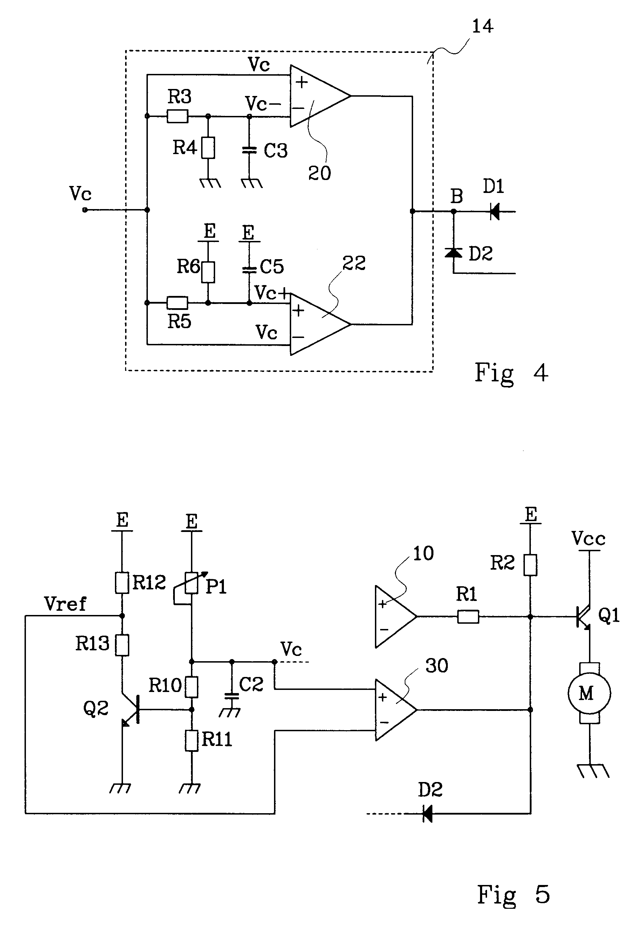

La figure 4 représente un mode de réalisation du détecteur de variation 14. Ce détecteur comprend deux comparateurs dont les sorties, qui sont à collecteur ouvert, sont reliées ensemble et constituent la sortie B du circuit détecteur 14. Un premier comparateur 20 est monté dans une configuration permettant de détecter une décroissance de la tension Vc et le deuxième comparateur 22 est monté dans une configuration permettant de détecter une croissance de la tension Vc.

L'entrée non-inverseuse du comparateur 20 reçoit directement la tension Vc et l'entrée inverseuse reçoit cette tension Vc à travers un filtre passe-bas. Le filtre passe-bas est ici constitué d'une cellule RC formée d'une résistance R3 reliée à la tension Vc et disposée en série avec une capacité C3 reliée à la masse. Une résistance de forte valeur R4 est disposée entre l'entrée inverseuse du comparateur 20 et la masse pour rendre, au repos, la tension Vc- sur l'entrée inverseuse légèrement inférieure à la tension Vc sur l'entrée non-inverseuse. Ainsi, on est sûr que la sortie du comparateur 20 est, au repos, à l'état inactif (état haut).

Le comparateur 22 est monté selon une configuration symétrique. La tension Vc est directement appliquée sur l'entrée inverseuse du comparateur 22 et par l'intermédiaire d'une cellule RC sur l'entrée non-inverseuse du comparateur 22. La cellule RC est formée d'une résistance R5 reliée à la tension Vc et disposée en série avec une capacité C5 que l'on a représentée reliée à la tension E. La capacité C5 peut être reliée à tout autre potentiel fixe, tel que la masse. La tension Vc+ sur l'entrée non-inverseuse du comparateur 22 est établie à une valeur légèrement supérieure à la tension Vc de l'entrée inverseuse par une résistance R6 de forte valeur reliée à un potentiel supérieur à Vc, tel que la tension E. Ainsi, comme pour le comparateur 20, la sortie du comparateur 22 est, au repos, à l'état inactif (haut).

Lorsque la tension Vc augmente, la tension Vc+ sur l'entrée non-inverseuse du comparateur 22 croît plus lentement que la tension Vc sur l'entrée inverseuse du comparateur 22 grâce à la cellule R5, C5. Ainsi, la tension Vc dépasse rapidement la tension Vc+ et la tension de sortie du comparateur 22 bascule à l'état bas, et ceci tant que la tension Vc continue à croître. Le comparateur 20 ne réagit pas car la tension Vc reste toujours supérieure à la tension Vc- sur l'entrée inverseuse du comparateur 20.

Lorsque la tension Vc décroît, le fonctionnement est symétrique. Grâce à la cellule R3, C3, la tension Vc- sur l'entrée inverseuse du comparateur 20 décroît moins vite que la tension Vc et la sortie des comparateurs 20 bascule à l'état bas. Ici, le comparateur 22 ne réagit pas.

On obtient donc bien à la sortie d'un tel détecteur, comme cela a été décrit en relation avec les courbes 3A à 3C, un état bas lorsque la tension Vc varie dans un sens ou dans l'autre, et un état bloquant les diodes D1 et D2 lorsque la tension Vc est constante.

La figure 5 représente des circuits optionnels que l'on peut ajouter au circuit de la figure 2. Ces circuits sont destinés à prévoir une annulation franche du débit lorsque la tension de consigne Vc est proche d'une valeur correspondant à un débit presque nul.

La tension Vc fournie au circuit de la figure 2 est obtenue au point de connexion entre un potentiomètre P1 relié à la tension E et un pont diviseur R10, R11 relié à la masse. Le pont diviseur R10, R11 commande la base d'un transistor Q2 à émetteur relié à la masse. Un autre pont diviseur R12, R13 est relié entre le collecteur du transistor Q2 et la tension E. A la sortie de ce pont diviseur R12, R13 est prise une tension de référence Vref.

La sortie du pont R1, R2 de la figure 2 est reliée à la sortie à collecteur ouvert d'un comparateur 30. L'entrée non-inverseuse de ce comparateur 30 reçoit la tension de consigne Vc et l'entrée inverseuse la tension de référence Vref. Lorsque la tension Vc est réglée à une valeur suffisamment grande, la tension de sortie du pont R10, R11 est suffisamment grande pour commander le transistor Q2 qui est alors passant. Le pont R12, R13 fournissant la tension de référence Vref est choisi de manière que la tension Vref soit inférieure à la valeur minimale d'utilisation normale de la tension Vc. Ainsi, le comparateur 30 n'intervient pas sur la commande du moteur M lors de réglages de débit habituels.

Lorsque la tension Vc atteint une valeur minimale correspondant à une tension de sortie du pont R10, R11 égale à la tension base-émetteur du transistor Q2, le transistor Q2 se bloque et la tension Vref atteint la valeur E. Alors, la sortie du comparateur 30 bascule à l'état bas qui inhibe la commande du moteur M.

De nombreuses variantes et modifications apparaîtront à l'homme du métier, il pourra notamment réaliser de nombreuses manières les fonctions des circuits décrits. Notamment, le comparateur 10, la source de courant 12, la capacité C1 et la diode D1 peuvent être remplacés par un temporisateur fournissant une impulsion de durée déterminée par la tension de consigne Vc et remis à zéro par l'impulsion de sortie du détecteur 14. Le détecteur 14 peut être réalisé à partir d'un dérivateur dont le signal de sortie est redressé et inversé.

## Revendications

1. Circuit de commande d'une vanne dont le débit dépend de la position d'un élément mobile d'un moteur (M), rappelé vers une position de repos en l'absence d'alimentation du moteur (M), caractérisé en ce qu'il comprend :
- un détecteur (14) de variation de tension recevant en entrée une tension de consigne de débit (Vc) comprise entre un potentiel bas (V_{c}=0) et un potentiel haut (E), et délivrant un signal de détection (VB) à l'état actif (V_{B}=0) tant que la tension de consigne (V_{c}) varie et à l'état inactif (V_{B}=E) tant que la tension de consigne (V_{c}) est constante ;
- un temporisateur (10, 12, C1, D1) prévu pour compter un intervalle de temps (T₂) de durée croissant avec la tension de consigne (V_{c}) et pour être initialisé à la fin (t₃) dudit état actif (V_{B}=0); et
- des moyens (D2, R1, R2, Q1) associés au temporisateur (10, 12, C1, D1) pour fournir au moteur (M) une tension nulle (V_{M}=0) tant que ledit signal de détection (V_{B}) est actif (V_{B}=0), une tension suffisante (E) pour entraîner le moteur (M) lorsque le temporisateur (10, 12, C1, D1) compte l'intervalle de temps (T₂), et une tension suffisante (V₁) pour maintenir le moteur (M) dans sa position à la fin de l'intervalle de temps (T₂).

2. Circuit de commande selon la revendication 1, caractérisé en ce que le temporisateur (10, 12, C1, D1) comprend un comparateur (10) comparant la tension de consigne (Vc) et la tension (VA) présente aux bornes d'une capacité (C1) chargée par une source de courant (12), une première diode (D1) étant disposée entre la capacité (C1) et la sortie du détecteur (14) pour décharger la capacité (C1) lorsque le signal de détection (VB) est actif (V_{B}=0).

3. Circuit de commande selon la revendication 2, caractérisé en ce que les moyens (D2, R1, R2, Q1) associés au temporisateur (10, 12, C1, D1) comprennent un pont diviseur (R1, R2) relié entre la sortie du comparateur (10) et le potentiel haut (E), la tension présente en un point intermédiaire du pont diviseur (R1, R2) étant amplifiée en courant pour être appliquée aux bornes du moteur (M), une deuxième diode (D2) étant disposée entre ledit point intermédiaire du pont (R1, R2) et la sortie (B) du détecteur (14) pour annuler la tension en ce point intermédiaire lorsque le signal de détection (VB) est actif (V_{B}=0).

4. Circuit de commande selon la revendication 1, caractérisé en ce que le détecteur (14) comprend au moins un montage constitué d'un comparateur (20, 22) recevant sur une entrée la tension de consigne (Vc) et sur l'autre entrée la tension de consigne (V_{c}) à travers un filtre passe-bas (R3-C3, R5-C5), et d'une résistance (R4, R6) reliée entre un potentiel adéquat (E, 0) et une des entrées du comparateur pour que ce comparateur (20, 22) fournisse au repos un signal de détection (V_{B}) à l'état inactif.

## Patentansprüche

1. Schaltung zum Steuern eines Ventils, dessen Strömung von der Position bzw. Stellung eines beweglichen Elements eines Motors (M) abhängt, das in eine Nicht-Betriebsposition zurückkehrt, wenn der Motor nicht erregt bzw. mit Energie versorgt wird, die folgendes aufweist:
- einen Sensor (14) zum Detektieren der Spannungsvariation, der an einem Eingang eine Strömungsreferenzspannung (V_{c}) empfängt, die zwischen einer niedrigen Spannung (V_{c=}0) und einer hohen Spannung (E) liegt und ein Detektionssignal (V_{B}) vorsieht, das in einem aktiven Zustand (V_{B}=O) ist, so lange die Referenz- bzw. Bezugspannung (V_{c}) variiert, und sich in einem inaktiven Zustand (V_{B}=E) befindet, solange die Bezugsspannung (V_{c}) konstant ist;
- einen Timer bzw. Zeitnehmer (10, 12, C1, D1) zum Zählen eines Zeitintervalls (T₂), das eine Dauer besitzt, die mit der Bezugsspannung (V_{c}) ansteigt und zum Initialisiertwerden an dem Ende (t₃) des aktiven Zustands (V_{B}=O); und
- Mittel (D2, R1, R2, Q1) die mit dem Timer (10,12, C1, D1) assoziiert sind, um folgendes vorzusehen: Versorgen des Motors (M) mit einer Nullspannung (V_{M}=O), solange das Detektionssignal (V_{B}) aktiv ist (V_{B}=O), eine ausreichende Spannung (E) zum Treiben des Motors (M), wenn der Timer (10, 12, C1, D2) das Zeitintervall (T₂) zählt, und eine Spannung (V₁), die ausreicht, um den Motor (M) in seiner Position am Ende des Zeitintervalls (T₂) zu halten.

2. Steuerschaltung nach Anspruch 1, dadurch gekennzeichnet, daß der Timer (10, 12, C1, D1) einen Komparator (10) aufweist, und zwar zum Vergleichen der Bezugspannung (V_{c}) mit der Spannung (V_{A}), die über dem Kondensator (C1) anliegt, der durch eine Stromquelle (12) aufgeladen wird, wobei eine erste Diode (D1) zwischen dem Kondensator (C1) und dem Ausgang des Sensors (14) angeordnet ist. um den Kondensator (C1) zu entladen, wenn das Detektionssignal aktiv ist (V_{B}=O).

3. Steuerschaltung nach Anspruch 2, dadurch gekennzeichnet, daß die Mittel (D2, R1, R2, Q1), die mit dem Timer (10, 12, C1, D1) assoziiert sind, eine Teilungsbrücke bzw. Spannungsteilerbrückenschaltung (R1, R2) aufweisen, die zwischen dem Ausgang des Komparators (10) und der hohen Spannung (E) verbunden ist, wobei die Spannung, die an einem Zwischenpunkt der Teilungsbrücke (R1, R2) anliegt, stromverstärkt wird, um über den Motor (M) angelegt zu werden, wobei eine zweite Diode (D2) zwischen dem Zwischenpunkt der Brücke (R1, R2) und dem Ausgang (B) des Sensors (14) angeordnet ist, um die Spannung an dem Zwischenpunkt aufzuheben, wenn das Detektionssignal (V_{B}) aktiv ist (V_{B}=0).

4. Steuerschaltung nach Anspruch 1, dadurch gekennzeichnet, daß der Sensor (14) mindestens eine Schaltung aufweist, die folgendes aufweist: einen Komparator (20, 22), der an einem ersten Eingang die Bezugsspannung (V_{c}) und an einem zweiten Eingang die Bezugsspannung (V_{c}) durch einen Tiefpaßfilter (R3-C3, R5-C5) empfängt und einen Widerstand (R4, R6), der zwischen einer adequaten Spannung (E, O) und einem der Eingänge des Komparators verbunden ist, so daß der Komparator (20, 22) in dem ruhenden Zustand ein Detektionssignal (V_{B}) in den inaktiven Zustand vorsieht.

## Claims

1. A circuit for controlling a valve whose flow depends upon the position of a mobile element of a motor (M), returned to an inoperative position when the motor is not energized, comprising:
- a sensor (14), for detecting the voltage variation, receiving at one input a flow reference voltage (Vc) comprised between a low voltage (V_{c}=0) and a high voltage (E), and providing a detection signal (VB) that is in an active state (V_{B}=0) as long as the reference voltage (Vc) varies, and in an inactive state (V_{B}=E) as long as the reference voltage (Vc) is constant;
- a timer (10, 12, C1, D1) for counting a time interval (T₂) having a duration which increases with the reference voltage (Vc) and for being initialized at the end (t₃) of said active state (V_{B}=0); and
- means (D2, R1, R2, Q1) associated with the timer (10, 12, C1, D1) for providing the motor (M) with a zero voltage (V_{M}=0) as long as said detection signal (V_{B}) is active (V_{B}=0), a sufficient voltage (E) for driving the motor (M) when the timer (10, 12, C1, D1) counts said time interval (T₂), and a voltage (V₁) sufficient for maintaining the motor (M) in its position at the end of the time interval (T₂).

2. The control circuit of claim 1, characterized in that the timer (10, 12, C1, D1) includes a comparator (10) for comparing the reference voltage (Vc) with the voltage (VA) present across a capacitor (C1) charged by a current source (12), a first diode (D1) being disposed between the capacitor (C1) and the output of the sensor (14) for discharging the capacitor (C1) when the detection signal is active (V_{B}=0).

3. The control circuit of claim 2, characterized in that the means (D2, R1, R2, Q1) associated with the timer (10, 12, C1, D1) include a dividing bridge (R1, R2) connected between the output of the comparator (10) and the high voltage (E), the voltage present at an intermediate point of the dividing bridge (R1, R2) being current-amplified to be applied across the motor (M), a second diode (D2) being disposed between said intermediate point of the bridge (R1, R2) and the output (B) of the sensor (14) to cancel the voltage at said intermediate point when the detection signal (VB) is active (V_{B}=0).

4. The control circuit of claim 1, characterized in that the sensor (14) comprises at least one circuit constituted by a comparator (20, 22) receiving at a first input the reference voltage (Vc) and at a second input the reference voltage (Vc) through a low-pass filter (R3-C3, R5-C5), and a resistor (R4, R6) connected between an adequate voltage (E, O) and one of the inputs of the comparator so that said comparator (20, 22) provides in the quiescent state a detection signal (V_{B}) in the inactive state.
